Europäisches Patentamt

European Patent Office

Office européen des brevets

(11) Numéro de publication : **0 094 040**
**B1**

## (12) FASCICULE DE BREVET EUROPÉEN

(45) Date de publication du fascicule du brevet :
06.07.88

(51) Int. Cl.⁴ : **H 04 L 27/18**, H 04 L 7/02

(21) Numéro de dépôt : 83104429.2

(22) Date de dépôt : 05.05.83

(54) **Système de transmission synchrone de données à l'aide d'une porteuse modulée d'amplitude d'enveloppe constante.**

(30) Priorité : 10.05.82 FR 8208043

(43) Date de publication de la demande :
16.11.83 Bulletin 83/46

(45) Mention de la délivrance du brevet :
06.07.88 Bulletin 88/27

(84) Etats contractants désignés :
BE CH DE FR GB IT LI NL

(56) Documents cités :
EP-A- 0 018 242
GB-A- 2 004 442
US-A- 4 146 841
US-A- 4 216 543
ALTA FREQUENZA, vol. 40, no. 2, février 1971, Milano, IT G. VETTORI: "Digital generation of a linear FM pulse of given timebandwidth product", pages 140-146
IEEE TRANS. ON VEHICULAR TECHNOLOGY, vol. VT-30, no. 3, août 1981, New York, US SHIGERU ASAKAWA et al.: "A compact spectrum constant envelope digital phase modulation", pages 102-111
IBM TECHNICAL DISCLOSURE BULLETIN, vol. 17, no. 12, mai 1975 New York, US J.F. DUBIL et al.: "Stored waveform technique for DPSK modem", pages 3643-3644

(73) Titulaire : **THOMSON-CSF**
**173, Boulevard Haussmann**
**F-75379 Paris Cédex 08 (FR)**

(72) Inventeur : **Boisseau, Alain**
**32, rue Monttessuy**
**F-91260 Juvisy sur Orge (FR)**
Inventeur : **Pivon, Claude**
**5, rue de l'Eglise**
**F-91700 Sainte Genevieve des Bois (FR)**

(74) Mandataire : **Turlèque, Clotilde et al**
**THOMSON-CSF SCPI 19, avenue de Messine**
**F-75008 Paris (FR)**

## Description

La présente invention concerne les systèmes de transmission synchrone de données par une modulation d'une porteuse conservant une amplitude d'enveloppe constante qui sont particulièrement bien adaptés aux liaisons radioélectriques en raison du niveau de puissance constant de la porteuse.

Dans ces systèmes, les données à transmettre sont converties seules, ou par groupes en symboles successifs de durée Δ dite intervalle Baud constituant le signal en bande de base et modulant en fréquence ou en phase une porteuse d'amplitude d'enveloppe constante. La plupart des systèmes du genre précité, connus sous les appellations FSK (Frequence Shift-Keying) ou PSK (Phase Shift-Keying) utilisent des symboles de forme rectangulaire simple.

Ces systèmes présentent l'inconvénient, en raison des modulations de phase ou de fréquence, d'utiliser un signal de transmission dont la bande passante est nettement plus large que celle occupée par les systèmes utilisant une modulation d'amplitude à bande latérale unique ou résiduelle. Cette largeur de bande occupée décroît avec l'indice de modulation mais reste au minimum voisine de celle d'une modulation d'amplitude à double bande latérale.

Il est connu de réduire la largeur de la bande occupée par un système de transmission à modulation de fréquence ou de phase en réduisant celle du signal en bande de base. On connaît notamment les systèmes de transmission MSK (Minimum Shift-Keying) dans lequel les symboles utilisés ont une forme triangulaire de manière à donner un signal en bande de base en dents de scie et les systèmes de transmission SFSK (Sinusoidal Frequence Shift-Keying) dans lesquels les symboles utilisés ont des formes sinuoïdales donnant au signal en bande de base un aspect en arches de sinuoïde. Dans les deux cas chaque symbole correspond à une augmentation ou à une diminution de π/2 de la phase de la porteuse ce qui limite à deux le nombre d'états possibles pour chaque symbole et empêche une augmentation de la vitesse de transmission par l'adoption d'un nombre plus grand de valeurs discrètes pour les symboles émis.

Il est connu d'appliquer au signal en bande de base les dispositions classiques en transmission de données pour réduire la largeur de la bande occupée c'est-à-dire un codage à réponse partielle et un filtrage selon les critères de Nyquist mais cela aboutit à multiplier en réception le nombre de valeurs discrètes possibles pour une même valeur de symbole émise.

Il est également connu d'utiliser une loi de variation de phase quadratique, de l'article par G. Vettori : « Digital generation of linear FM pulse of given time-bandwidth product » dans Alta Frequenza, vol. 40, nº 2, février 1971.

La présente invention a pour but un système de transmission de données à l'aide d'une porteuse modulée, d'amplitude d'enveloppe constante, occupant une largeur de bande de fréquence faible eu égard à son débit et ne présentant pas les limitations des systèmes précédemment décrits.

Elle a également pour but un système de transmission de données dont les parties émettrice et réceptrice soient facilement réalisables sous forme numérique à l'aide de microcircuits à grande échelle d'intégration.

Elle a pour objet un système de transmission selon la revendication 1.

A l'émission, les lois de variation de phase peuvent être stockées sous forme de groupes d'échantillons dans une mémoire numérique et sélectionnées à partir du saut de phase à réaliser déterminé par le codage et des deux qui l'ont précédé.

A la réception, les données sont récupérées à partir des valeurs des sauts de phase qui commencent et se terminent aux extrémités des symboles. Pour ce faire, la loi de variation de phase de la porteuse d'émission est extraite par une démodulation synchrone du signal reçu. Au cours d'un prédécodage, cette loi de variation de phase se voit retrancher une version d'elle-même retardée de la durée d'un symbole afin de délivrer la valeur instantanée du saut de phase effectué par la porteuse sur la durée d'un symbole. La sélection des sauts de phase commençant et se terminant aux extrémités des symboles et l'appréciation de la dérive entre les porteuses d'émission et de réception se fait par une double corrélation tenant compte du fait que les sauts de phase recherchés, distants de la durée d'un symbole sont les seuls à avoir les valeurs discrètes utilisées à l'émission pour le codage des données et à être affectés d'une composante continue ou très faiblement variable due à la dérive entre les porteuses d'émission et de réception.

D'autres caractéristiques et avantages de l'invention ressortiront des revendications jointes et de la description ci-après d'un mode de réalisation donné à titre d'exemple. Cette description sera faite en regard du dessin dans lequel :
— la figure 1 est un schéma général d'un système de transmission de données selon l'invention,
— la figure 2 détaille les éléments de l'émetteur du système de transmission de la figure 1,
— et la figure 3 détaille les éléments du récepteur du système de transmission de la figure 1.

On voit, de par les systèmes de transmission de données de l'art antérieur utilisant une porteuse modulée angulairement conservant une amplitude d'enveloppe constante, qu'il est possible de réduire la largeur de bande de fréquence occupée en remplaçant les symboles rectangulaires utilisés dans les systèmes PSK ou FSK simples par des symboles dont la forme autorise une variation de phase continue de la porteuse, les données étant alors représentées par les différences de phase de la porteuse aux extrémités des symboles. Si on considère la transmission d'une suite de symboles $S_0, \ldots S_n$ occupant chacun un intervalle de temps constant $\Delta$ dit intervalle Baud, la variation de phase $\varphi(t)$ de la porteuse peut être décomposée en la succession des variations de phase $\varphi_0(t) \ldots \varphi_n(t)$ de la porteuse au cours de chacun de ces symboles :

$$\varphi_n(t) = \delta(t - n\Delta)\varphi(t)$$

l'origine du symbole $S_0$ étant choisie comme origine du temps et la fonction $\delta$ étant définie classiquement par :

$$\delta(t - n\Delta) = 1 \text{ pour } n\Delta \leqslant t \leqslant (n + 1)\Delta \text{ et } 0 \text{ en dehors}$$

Le signal de transmission émis au cours d'un symbole $S_n$ peut être considéré comme la partie réelle du signal complexe :

$$V_n = A \exp(i\omega_0 t + i\varphi_n(t))$$

$\omega_0$ étant la fréquence de la porteuse avant modulation et A le niveau constant de son enveloppe dont le spectre de fréquence $V_n(\omega)$ s'exprime par l'intégrale de Fourier

$$V_n(\omega) = A \int_{n\Delta}^{(n+1)\Delta} \exp(i\omega_0 t + i\varphi_n(t) - i\omega t)\, dt$$

Cette intégrale opère sur une fonction à module constant dont la phase varie très vite. $\varphi_n(t)$ étant une fonction continue, on peut appliquer le principe de la phase stationnaire selon lequel seuls les points où :

$$\frac{d}{dt}(\omega_0 t + \varphi_n(t) - \omega t) = 0$$

fournissent une contribution appréciable. Ces points sont ceux pour lesquels :

$$\omega - \omega_0 = \frac{d\varphi_n(t)}{dt}$$

La largeur du spectre autour de $\omega_0$ est donnée, en première approximation, par :

$$\max(\omega - \omega_0) = \max \frac{d\varphi_n(t)}{dt}$$

Pour réduire au maximum la largeur du spectre occupé pendant la transmission du symbole $S_n$, il faut donc minimiser la pente maximale de la loi de variation de phase $\varphi_n(t)$ au cours de ce symbole. On dispose donc, pour déterminer cette loi $\varphi_n(t)$ de quatre conditions :
— obtenir à l'origine du symbole $S_n$ et à l'extrémité du symbole $S_{n-1}$ qui le précède la même valeur de phase et la même pente,
— obtenir la variation de phase désirée en fin du symbole $S_n$
— et minimiser la pente maximale de la loi de phase au cours du symbole $S_n$.
On adopte pour résoudre ce problème une solution polynomiale du troisième degré ce qui donne au cours du symbole $S_n$ une loi de phase de la forme :

$$\varphi_n(T) = \varphi_n(0) + a_n T + b_n T^2 + c_n T^3 \qquad \text{avec } T = t + n\Delta$$

Le coefficient $\varphi_n(0)$ qui est la phase à l'origine du symbole $S_n$ doit être égal à la phase en fin du symbole précédent $S_{n-1}$ :

$$\varphi_n(0) = \varphi_{n-1}(\Delta)$$

Le coefficient $a_n$ est la pente de la loi de phase à l'origine du symbole $S_n$ et doit être égal à la pente de la loi de phase en fin du symbole précédent :

$$a_n = \frac{d\varphi_n(0)}{dt} = \frac{d\varphi_{n-1}(\Delta)}{dt} \qquad \qquad (I)$$

Les coefficients $b_n$ et $c_n$ sont déterminés par la phase $\varphi_n(\Delta)$ à obtenir en fin de symbole $S_n$ compte tenu de la variation de phase désirée et par la minimisation de la pente maximale de la loi de phase :

0 094 040

$$b_n = \frac{9}{4\Delta^2}\left(\varphi_n(\Delta) - \varphi_n(0) - a_n\Delta\right)$$

$$c_n = -\frac{5}{4\Delta^3}\left(\varphi_n(\Delta) - \varphi_n(0) - a_n\Delta\right)$$

ou, en fonction du saut de phase n effectué au cours du symbole $S_n$

$$b_n = \frac{9}{4\Delta^2}\left(\theta_n - a_n\Delta\right)$$

$$c_n = -\frac{5}{4\Delta^3}\left(\theta_n - a_n\Delta\right)$$

Le coefficient $a_n$ s'obtient par récurrence à partir du coefficient $a_{n-1}$ du symbole précédent $S_{n-1}$ en faisant application de la relation 1

$$a_n = \frac{3}{4\Delta}\theta_{n-1} + \frac{1}{4}a_{n-1}$$

ou encore, sur trois symboles successifs :

$$a_n = \frac{3}{4\Delta}\theta_{n-1} + \frac{3}{16\Delta}\theta_{n-2} + \frac{3}{64\Delta}\theta_{n-3} + \frac{1}{64}a_{n-3}$$

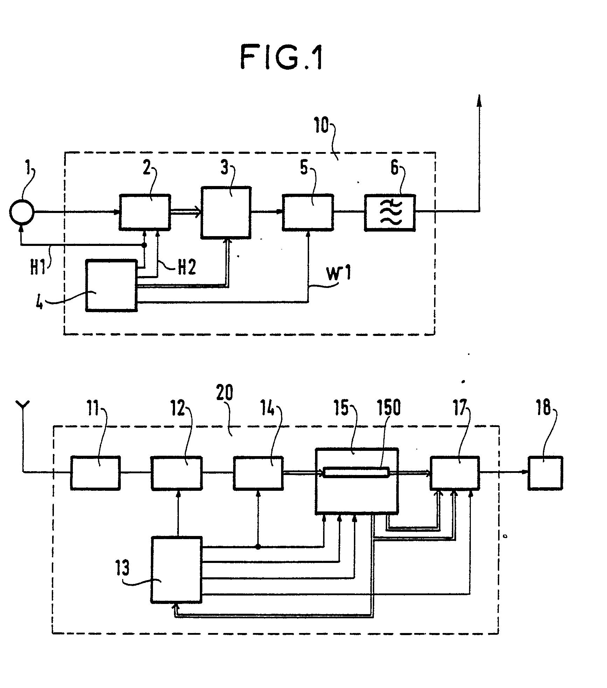

On s'aperçoit que l'influence des sauts de phase au cours des symboles précédents décroît rapidement et qu'il suffit de prendre en considération trois symboles successifs. La modification d'un système PSK classique autorisant n valeurs distinctes de sauts de phase conduit alors à $n^3$ lois possibles de variation de phase au cours d'un symbole. Ce nombre peut être réduit par l'interdiction de certaines configurations de saut et par des raisons de symétrie. On va décrire ci-après un exemple de système de transmission numérique selon l'invention, dérivé d'un système de transmission par sauts de phase à quatre états. Son schéma général est représenté à la figure 1. Une source synchronisable 1 délivre sous forme série les données binaires à transmettre et les applique à un émetteur 10 en liaison radioélectrique avec un récepteur 20 qui les restitue à une utilisation 18. L'émetteur 10 comporte essentiellement un codeur 2 qui détermine les sauts de phase correspondant aux données à émettre ainsi que la loi de variation de phase utilisable, un synthétiseur de symboles 3 commandé par le codeur 2, une base de temps d'émission 4 délivrant la porteuse d'émission et différents signaux de cadencement nécessaires à la synchronisation de la source de données 1, du codeur 2 et du synthétiseur 3, un modulateur 5 modulant angulairement la porteuse d'émission selon les lois de variation de phase engendrées par le synthétiseur de symboles 3, un filtre passe-bas 6 et éventuellement un étage d'amplification selon la technique habituelle des radioémetteurs. Le récepteur 20 comporte, outre un circuit d'entrée d'antenne 11, un démodulateur synchrone 12 fonctionnant à partir d'une porteuse locale délivrée par une base de temps de réception 13, un prédécodeur 14 délivrant la valeur instantanée du saut de phase effectué par la porteuse sur la durée d'un symbole, un récupérateur de cadence de symboles et détecteur de dérive entre porteuses d'émission et de réception 15 engendrant à partir du signal délivré par le prédécodeur 14 et de signaux de cadencement de la base de temps de réception 13, un signal d'horloge synchrone avec les symboles émis et un signal d'appréciation de la dérive entre les porteuses d'émission et de réception, un circuit à retard 150 interne au récupérateur de cadence et détecteur de dérive 15 qui compense le temps de traitement de ce dernier et un décodeur 17 connecté à la sortie du circuit de prédécodage 14 par l'intermédiaire du circuit à retard 150 et piloté par le récupérateur de cadence et détecteur de dérivé 15 qui délivre les données reçues à l'utilisation 18.

Ce système de transmission fait correspondre à chaque débit à émettre un symbole au cours duquel est effectué un saut de phase 0, $+\pi/2$, $-\pi/2$, $\pm\pi$ dépendant de la valeur du dibit. La liberté de choix du sens du saut de phase d'amplitude $\pi$ provient de la périodicité $2\pi$ des fonctions trigonométriques et est mise à profit pour éviter les successions de sauts de phase les plus coûteuses en largeur de bande ($+\pi$, $-\pi$), ($+\pi/2$, $-\pi$), ($\pi$, $+\pi$), ($-\pi/2$, $+\pi$). La forme du symbole, une fois connu le saut de phase à réaliser, est définie par une loi de variation de phase :

$$\varphi_n(T) - \varphi_n(0) = a_n T + b_n T^2 + c_n T^3 \qquad 0 \leq T \leq \Delta$$

dont les coefficients $a_n$, $b_n$, $c_n$ sont déterminés en fonction du saut de phase à effectuer $\theta_n$ et des sauts de phase $\theta_{n-1}$ et $\theta_{n-2}$ effectués au cours des deux symboles précédemment émis par les formules :

$$a_n = \frac{3}{4\Delta}\left(\theta_{n-1} + \frac{1}{4}\theta_{n-2}\right)$$

4

$$b_n = \frac{9}{4\,\Delta^2}\,(\theta_n - a_n\,\Delta)$$

$$c_n = -\frac{5}{4\,\Delta^3}\,(\theta_n - a_n\,\Delta)$$

Etant donné les cinq valeurs de saut de phase autorisées, il y a théoriquement 125 lois possibles de phase (cinq à la puissance trois) mais ce nombre est réduit à 90 en raison des successions interdites de sauts de phase et divisé par deux par raison de symétrie. Ce nombre est suffisamment faible pour que l'on puisse stocker les lois de variations de phase sous forme échantillonnée dans une mémoire numérique.

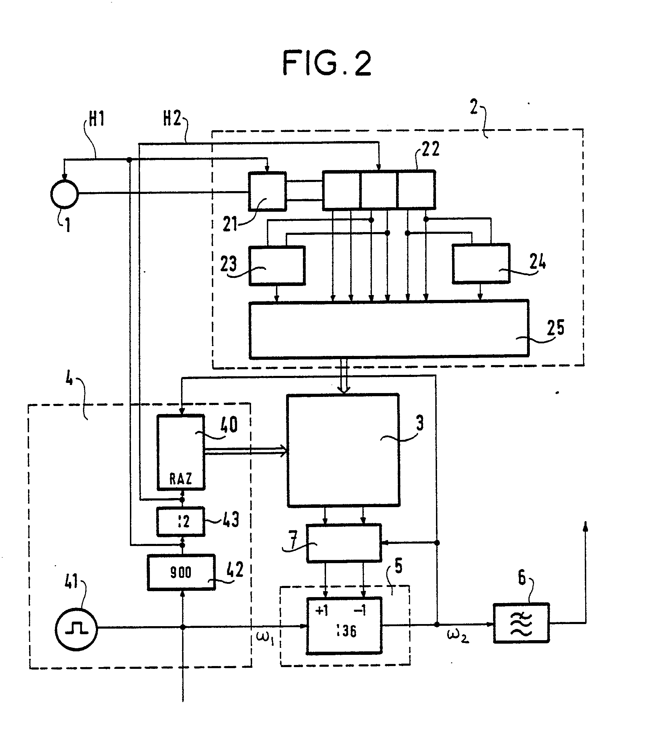

La figure 2 détaille la constitution entièrement numérique de l'émetteur 10.

Le codeur 2 comporte :
— un convertisseur série-parallèle 21 transformant la suite des données binaires à transmettre en deux suites synchrones de débit moitié, égal à la cadence Baud, délivrant des dibits, un double registre à décalage 22 à trois étages à entrée série et sorties parallèles rendant disponibles sur ses sorties le dibit à transmettre et les deux qui l'ont précédé, deux bascules bistables 23, 24 sensibles à certaines valeurs des dibits et connectées en entrée aux sorties des deuxième et troisième étages du double registre à décalage 22, et une mémoire morte de transcodage 25 connectées en entrée aux sorties des bascules 23, 24 et du double registre à décalage 22.

Les bascules 23, 24 déterminent les sens des sauts de phase de $\pi$ de manière à éviter les successions interdites de sauts. Elles sont sensibles aux valeurs des dibits correspondant aux sauts de phase $+ \pi/2$ et $- \pi/2$. L'apparition à l'entrée d'une bascule d'une valeur de dibit correspondant à un saut de phase de $+ \pi/2$ place la sortie de la bascule dans un état fixant positivement tout saut de phase ultérieur de $\pi$, que ce saut de phase corresponde au dibit disponible au même instant sur la sortie de l'étage précédent du double registre à décalage ou au dibit présent à l'instant Baud suivant à l'entrée de la bascule. L'apparition à l'entrée d'une bascule d'une valeur de dibit correspondant à un saut de phase du $- \pi/2$ à l'effet inverse. A chaque dibit présent sur les sorties des trois étages du registre à décalage 22 se trouve donc associé un bit supplémentaire indiquant le sens d'un éventuel saut de phase de $\pi$. La mémoire morte 25 assure la réduction à 7 bits de l'adressage à 8 bits délivrés par les sorties des bascules 23, 24 et du double registre à décalage 22 qui est surabondant pour une sélection de un parmi 45.

Le synthétiseur de symboles 3 est une mémoire morte organisée en 45 pages et adressée au niveau de l'ensemble des pages par le codeur 2. Chaque page contient un échantillonnage de la loi de variation de phase correspondant à la configuration de dibits en sortie du registre à décalage ayant abouti à sa sélection. Cet échantillonnage est une approximation par échelons de même amplitude présent ou absent, positif ou négatif. Il se présente sous la forme d'une collection de dibits et se fait de manière suffisamment rapprochée pour permettre une quantification par petits échelons et limiter le bruit d'échantillonnage. Il comporte par exemple, pour chaque loi de variation de phase 50 échantillons avec un échelon de quantification de $\pm 10°$ ce qui conduit à une mémoire morte de capacité moyenne de 4 500 bits. La mémoire morte du synthétiseur de symboles 3 est adressée au sein de chaque page à l'aide d'un compteur 40 à sept digits remis à zéro à la fin de chaque intervalle Baud et incrémenté par le signal rectangulaire de sortie du modulateur 5 dont la fréquence moyenne est de 50 fois la cadence Baud.

Le modulateur 5 est un compteur par trente-six qui peut également compter par trente-cinq ou trente-sept selon l'état d'une commande à deux bits raccordée par l'intermédiaire d'un étage de synchronisation 7 à la sortie lecture de la mémoire du synthétiseur de symboles 3. Il reçoit une fréquence pilote $\omega_1$ de la base de temps d'émission 4 et délivre un signal rectangulaire dont la période moyenne $1/\omega_2$ égale à $36/\omega_1$ peut être raccourcie de 1/36 (10 degrés) lorsqu'il compte par trente-cinq ou augmentée de 1/36 (10 degrés) lorsqu'il compte par trente-sept.

L'étage de synchronisation 7 est piloté par le signal de sortie du modulateur 5 et n'autorise un changement du rapport de division qu'en début de chaque période du signal de sortie du modulateur 5.

Le filtre passe-bas 6 filtre le bruit d'échantillonnage des lois de variation de phase. Dans la pratique, il fait partie de la boucle d'asservissement en phase d'un oscillateur contrôlé en tension qui effectue éventuellement une translation en fréquence et qui engendre le signal d'émission.

La base de temps d'émission 4 engendre les signaux de cadencement nécessaires à la source de données 1, au codeur 2 et au synthétiseur de symboles 3 à partir d'un oscillateur unique qui délivre la fréquence pilote $\omega_1$.

La cadence Baud $1/\Delta$ ou fréquence des symboles est dans un rapport 1800 avec la fréquence pilote $\omega_1$ ($50 \times 36$). Elle est obtenue à l'aide de deux diviseurs en cascade l'un 42 divisant par 900 et fournissant un signal d'horloge $H_1$ à la cadence des données qui sert à synchroniser la source des données 1 et le convertisseur série parallèle 21, l'autre 43 divisant par 2 et fournissant un signal d'horloge $H_2$, à la cadence Baud $1/\Delta$ utilisé pour cadencer le double registre à décalage 22 et pour remettre à zéro le compteur 40 adressant la mémoire du synthétiseur de symboles 3 au niveau de chaque page. Ce signal de remise à zéro permet de resynchroniser la lecture d'une page de la mémoire du synthétiseur 3 sur la cadence Baud. En effet, cette lecture se fait d'une manière asynchrone en raison de la modulation de phase affectant son signal de cadencement. La resynchronisation peut soit abréger la lecture d'une page en provoquant l'omission du premier échantillon soit prolonger la lecture d'une page en provoquant une double lecture du premier échantillon.

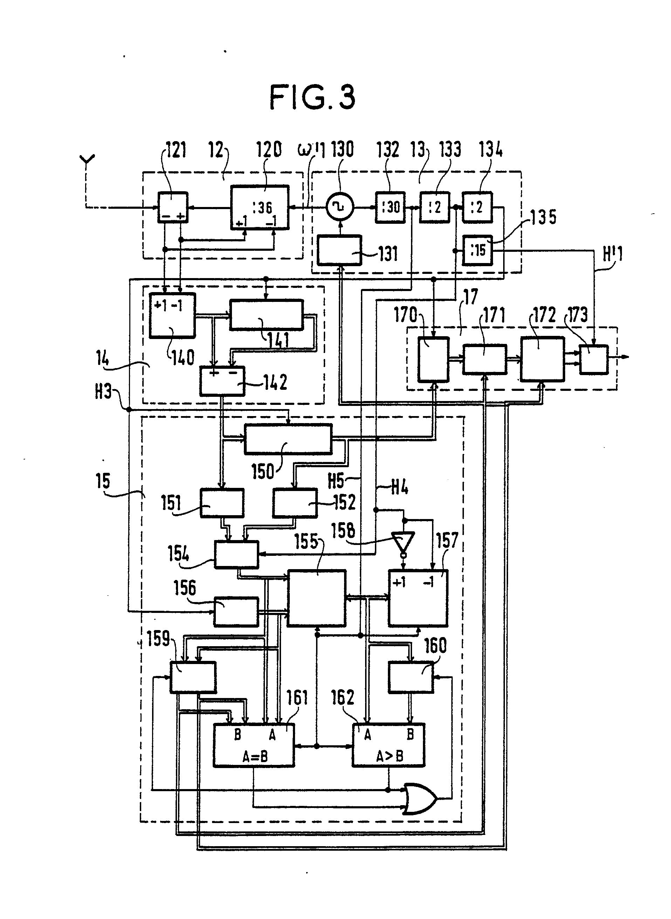

La figure 3 détaille la constitution du récepteur 20 à l'exception des circuits disposés entre l'antenne et le démodulateur de technique classique, qui ne font pas partie de la présente invention.

Le démodulateur synchrone 12 est constitué d'un diviseur programmable 120 fonctionnant en modulateur de phase et d'un comparateur de phase 121 asservissant en phase, par l'intermédiaire du diviseur programmable 120 une porteuse locale sur le signal de sortie du modulateur 5 d'émission lui parvenant par les circuits de l'antenne de réception.

Le comparateur de phase 121 reçoit sur ses deux entrées une version du signal de sortie du modulateur 5 de l'émetteur en provenance des circuits de l'antenne de réception et une porteuse locale délivrée par le diviseur programmable 120. Il fournit sur deux sorties distinctes deux signaux binaires représentatifs l'un d'une diminution de l'écart de phase entre ses deux signaux d'entrée et l'autre d'une augmentation, utilisés pour fixer le rapport de division du diviseur programmable 120.

Le diviseur programmable 120 a un rapport de division égal à $36 \pm 1$ fixé par le comparateur de phase 121 à 37 ou respectivement 35 ou 36 lorsque ce dernier détecte une diminution ou respectivement une augmentation ou. un maintien d'écart de phase. Il reçoit de la base de temps de réception 13 une fréquence pilote $\omega'_1$ égale à la fréquence pilote d'émission $\omega_1$. Il délivre en sortie un signal de même période moyenne $\omega'_1/36$, à la dérive près entre les fréquences pilotes $\omega_1$ et $\omega'_1$, que le signal de sortie du modulateur d'émission 5 parvenant par les circuits d'antenne de réception au comparateur de phase 121. Lorsque le comparateur de phase 121 détecte un écart de phase en augmentation, la période de son signal de sortie est raccourcie de 1/36 ce qui revient à un déphasage de — 10 degrés allant à l'encontre de cette augmentation. En sens inverse, lorsque le comparateur de phase 121 détecte un écart de phase en diminution, la période de son signal de sortie est allongée de 1/36 ce qui revient à un déphasage de + 10 degrés allant à l'encontre de la diminution d'écart de phase. Après verrouillage de l'asservissement les sauts de phase de $\pm 10°$ effectués par le diviseur programmable 121 pour maintenir constant l'écart de phase sont identiques, à la dérive près entre les fréquences pilotes $\omega_1$, $\omega'_1$, à ceux effectués par le modulateur 5 de l'émetteur 10.

Les sauts de phase élémentaires de $\pm 10$ degrés détectés par le comparateur de phase 121 du démodulateur 12 sont appliqués à un circuit de prédécodage 14 élaborant la valeur globale du saut de phase effectué depuis la durée $\Delta$ d'un intervalle Baud et échantillonnant cette valeur quinze fois par période Baud.

Ce circuit de prédécodage 14 comporte un compteur-décompteur binaire 140 d'une capacité de six bits, bouclé sur lui-même, comptant et décomptant en complément à deux entre $\pm 18$ au rythme des signaux de sortie du comparateur de phase 121 et reproduisant, à une constante et à la dérive entre les fréquences pilotes $\omega_1$, $\omega'_1$ près, la loi de modulation de phase d'émission. Un registre à décalage 141 à entrée et sortie série à six bits parallèles et quinze étages est connecté à la sortie de ce compteur-décompteur binaire 140 et cadencé par un signal d'horloge $H_3$ ayant quinze fois la fréquence Baud $1/\Delta$.

Un soustracteur numérique 142 effectue la différence entre les signaux d'entrée et de sortie du registre à décalage à quinze étages 141 et délivre le signal de sortie du circuit de prédécodage 14.

Le saut de phase effectué à l'émission au cours d'un symbole et à partir duquel on peut identifier le dibit transmis correspond, si l'on fait abstraction de la quantification introduite par la périodicité de l'échantillonnage et de la dérive entre les fréquences pilotes $\omega_1$ et $\omega'_1$ à l'un des quinze échantillons délivrés au cours de chaque période Baud. L'échantillonnage est suffisamment dense au cours de chaque période Baud pour que son effet soit négligé. Par contre la dérive entre les fréquences pilotes $\omega_1$ et $\omega'_1$ se traduit, sur les valeurs de saut de phase détectées, par une composante continue ou faiblement variable indépendante de la valeur des sauts de phase d'émission. Pour déterminer la valeur de cette composante continue et le rang parmi quinze des échantillons du signal de sortie de prédécodage qui correspondent à des sauts de phase entre début et fin de symboles on procède à une double corrélation sur la durée d'un certain nombre de symboles, 38 dans le cas présent, entre échantillons de même rang parmi quinze et de même composante continue, la composante continue étant considérée comme l'écart entre la valeur de l'échantillon de saut de phase considéré et la plus proche parmi les valeurs de seuils 0, $\pm \pi/2$, $\pm \pi$. Comme les sauts de phase sont estimés à 10 degrés près et que l'écart maximum entre la valeur d'un échantillon de saut de phase et la plus proche parmi les valeurs de seuil 0, $\pm \pi/2$, $\pm \pi$ est de $\pm 45$ degrés, cette double corrélation entraîne la création de 9 catégories déterminées par la valeur de la composante continue et de 15 groupes par catégorie déterminés par le rang parmi quinze de l'échantillon soit, au total 135 classes. Les échantillons de saut de phase reçus correspondant à des sauts de phase entre début et fin de symbole affectés de la composante continue due à la dérive entre les fréquences pilotes $\omega_1$ et $\omega'_1$ font tous partie d'une même classe ce qui n'est pas le cas des autres étant donné la variété des formes que peut prendre la loi de variation de phase au cours d'un symbole. Cette classe est la plus peuplée et se repère par le dénombrement des éléments des différentes classes résultant de la corrélation.

Le corrélateur 15 qui effectue ce traitement comporte un registre à décalage 150 à entrée et sortie série de 6 bits parallèles et à 720 étages qui mémorise sur une durée de 48 symboles les sauts de phase délivrés par le circuit de précodage 14 de manière à pouvoir faire entrer chaque saut de phase dans la corrélation dès son apparition en sortie du circuit de précodage 14 et l'en retirer au bout d'un délai de 48 symboles. Ce registre à décalage 150 est cadencé en synchronisme avec le registre à décalage 141 du circuit de précodage 14 par le signal d'horloge $H_3$. Ses entrées et sorties sont connectées à deux mémoires mortes de transcodage identiques 151 et 152 qui déterminent l'écart de chaque valeur de saut de phase par rapport à la plus proche valeur de seuils 0, $\pm \pi/2$, $\pm \pi$ et lui fait correspondre un nombre binaire à quatre bits. Les sorties de ces mémoires mortes 151 et 152 aboutissent sur un sélecteur à deux entrées de quatre bits 154 actionné à une cadence trente fois supérieure à la cadence Baud grâce à un signal d'horloge $H_4$ à la fréquence double du signal d'horloge $H_3$. Ce sélecteur 154 permet pendant la durée de présentation $\Delta/15$ de chaque échantillon de saut de phase en sortie du circuit de précodage 14 de faire entrer dans un premier temps ledit échantillon dans la corrélation et d'en faire sortir dans un deuxième temps l'échantillon antérieur de 48 symboles.

Une mémoire vive 155 mémorise les comptes d'occupation des différentes classes de corrélation. Son adressage à double indice est effectué d'une part, par le signal de sortie du sélecteur 154 qui fait une première sélection au niveau des catégories de corrélation c'est-à-dire en fonction du critère sur l'écart par rapport à la valeur de seuil la plus proche et d'autre part, par le signal de sortie d'un compteur par quinze à sortie de cinq bits parallèles 156 qui fait une deuxième sélection à l'intérieur des catégories en fonction du rang parmi quinze de chaque échantillon et qui est incrémenté par le signal d'horloge $H_3$. Cette mémoire vive 155 est reliée par un bus de données bidirectionnel à une unité de calcul 157 qui met à jour les comptes d'occupation des différentes classes de corrélation.

L'unité de calcul 157 peut soit incrémenter soit décrémenter d'une unité les données qui lui proviennent de la mémoire vive 155. Elle comporte une commande d'incrémentation et une commande de décrémentation contrôlées en commun, l'une directement, l'autre par l'intermédiaire d'un inverseur 158 par le signal d'horloge $H_4$ adressant le sélecteur 154 ainsi qu'une entrée de contrôle connectée en parallèle avec la commande de lecture ou d'écriture de la mémoire vive 155 et contrôlée par un signal d'horloge $H_5$ à la fréquence quadruple de la fréquence $H_3$.

Une période du signal d'horloge $H_3$ représente la durée de présentation d'un échantillon de saut de phase à la sortie du circuit de prédécodage 14. Pendant le premier quart de période la mémoire vive 155 est en lecture, son adressage étant contrôlé par l'échantillon de saut de phase présent en sortie du circuit de précodage 14 l'unité de calcul 157 qui a l'ordre de procéder à une incrémentation prélève la valeur de compte lue dans la mémoire vive 155 et l'accroît d'une unité. Pendant le deuxième quart de période la mémoire vive 155 dont l'adressage n'a pas changé passe en écriture et enregistre la nouvelle valeur de compte délivrée par l'unité de calcul 157. Au début du troisième quart de période, la mémoire vive 155 repasse en lecture, le sélecteur 154 bascule faisant passer l'adressage de la mémoire vive 155 sous le contrôle de l'échantillon de saut de phase en sortie du registre à décalage 150 antérieur au précédent de 48 symbole et l'unité de calcul 157 qui reçoit un ordre de décrémentation, relève la valeur de compte lue dans la mémoire vive 155 et la diminue d'une unité. Pendant le dernier quart de période la mémoire vive 155 dont l'adressage n'a pas changé passe en écriture et enregistre la nouvelle valeur de compte délivrée par l'unité de calcul 157. La somme globale des différents comptes stockés dans la mémoire vive 155 reste constamment égale au nombre de 720 qui correspond aux nombres d'échantillons pris en compte dans la double corrélation. Seule la répartition des composantes de cette somme au sein des différentes classes évolue en fonction de la position des symboles par rapport au signal d'horloge $H_3$ et de la dérive entre les fréquences pilote d'émission $\omega_1$ et de réception $\omega'_1$.

Un détecteur de maximum permet de déterminer à chaque instant la classe de corrélation ayant le compte le plus important. Il comporte un registre mémoire d'adresse 159 connecté en parallèle sur l'adressage de la mémoire vive 155, un registre mémoire de données 160 connecté en parallèle sur le bus de données reliant l'unité de calcul 157 à la mémoire vive 155, un comparateur d'adresses à deux entrées 161 reliées aux lignes d'adresses de la mémoire vive 155 et à la sortie du registre mémoire d'adresses 159 détectant l'égalité entre deux adresses appliquées à ses entrées et un comparateur de données à deux entrées 162 reliées au bus de données et à la sortie du registre mémoire de données 160 détectant la supériorité de la donnée présente sur le bus d'adresses par rapport à celle inscrite dans le registre mémoire de données 160.

Le comparateur de données 162 est activé par le signal d'horloge $H_5$ chaque fois que la mémoire vive 155 est en écriture. Il commande le chargement du registre mémoire de données 160 et du registre mémoire d'adresses 159 chaque fois qu'il détecte la présence sur le bus de données d'une donnée d'amplitude supérieure à celle inscrite dans le registre mémoire de données 160 assurant ainsi la conservation dans le registre mémoire d'adresses de l'adressage de la classe de corrélation ayant le compte le plus important.

Le comparateur d'adresses 161 est également activé par le signal d'horloge $H_5$ chaque fois que la mémoire vive 155 est en écriture. Il commande le chargement du registre mémoire de données 160 à chaque mise à jour du compte qu'il mémorise.

On remarque que l'on détermine effectivement le compte le plus élevé bien qu'il n'y ait pas un balayage systématique de la mémoire vive 155 car le compte le plus élevé est nécessairement le plus adressé au cours de la répartition des échantillons. L'adresse de ce compte qui se trouve stockée dans le registre mémoire d'adresse 159 donne le rang parmi quinze, le plus probable des échantillons de saut de phase coïncidant avec les extrémités des symboles émis ainsi que la valeur de composante continue la plus probable due à la dérive entre les fréquences pilotes $\omega_1$ et $\omega'_1$ d'émission et de réception. Elle est utilisée par le décodeur 17 pour le choix des échantillons et des valeurs de seuils.

Le décodeur 17 comporte en entrée un registre à décalage 170 à six bits parallèles avec quinze étages entrée série et sorties parallèles qui est connecté à la suite du registre à décalage 150 du corrélateur et cadencé en synchronisme avec ce dernier par le signal d'horloge $H_3$. Un sélecteur 171 à quinze entrées est connecté aux sorties parallèles du registre à décalage 170. Il est adressé par la partie du signal de sortie du registre mémoire d'adresses 159 relative au choix du rang parmi quinze et délivre en sortie, tous les intervalles Baud, l'échantillon de saut de phase parmi les quinze s'échelonnant sur un intervalle Baud qui coïncide avec les extrémités d'un symbole. Une mémoire morte de décodage 172 adressée pour partie par la partie du signal de sortie du registre mémoire d'adresses 159 relative à la valeur de la composante continue due à la dérive entre les fréquences pilotes d'émission $\omega_1$ et de réception $\omega'_1$, et pour partie par l'échantillon de saut de phase fourni par le sélecteur 171 délivre la valeur du dibit émis. Un convertisseur parallèle série 173 connecté à la suite de la mémoire morte de décodage 172 assure le multiplexage des dibits et une resynchronisation des données sur un signal d'horloge $H'_1$ au double de la cadence Baud.

La base de temps de réception 13 délivre l'ensemble des signaux de cadencement nécessaires aux différentes parties du récepteur à partir d'un oscillateur unique 130 et d'une série de diviseurs. L'oscillateur 130 délivre la fréquence pilote de réception $\omega'_1$. Il est muni d'une boucle d'asservissement permettant de limiter sa dérive par rapport à la fréquence pilote d'émission $\omega_1$ et utilisant l'estimation de dérive fournie par le corrélateur 15. C'est par exemple un oscillateur contrôlé en tension commandé par un circuit intégrateur à compteur décompteur et convertisseur numérique-analogique 131 lui fournissant une tension incrémentée ou décrémentée à période régulière en fonction du signe et de l'amplitude de la dérive constatée.

Le signal d'horloge $H_3$ dont la cadence doit être quinze fois la cadence Baud est tiré de la fréquence pilote de réception $\omega'_1$ qui est, comme la fréquence pilote d'émission $\omega_1$, à 1 800 fois la cadence Baud par une division de rapport 120. Le signal d'horloge $H_4$ qui est à la fréquence double du signal d'horloge $H_3$ est tiré de la fréquence pilote de réception $\omega'_1$ par une division de rapport 60. Le signal d'horloge $H_5$ qui est à une fréquence quadruple du signal d'horloge $H_3$ est tiré de la fréquence pilote de réception par une division du rapport 30. Le signal d'horloge $H'_1$ à la cadence des données double de la cadence Baud est tiré de la fréquence pilote de réception $\omega'_1$ par une division de rapport 900. Cela s'obtient comme représenté, par une cascade de diviseurs, le premier 132 ayant un rapport de division de 30 et délivrant le signal d'horloge $H_5$, le deuxième 133 connecté à la suite du premier ayant un rapport de division de 2 et délivrant le signal d'horloge $H_4$, le troisième 134 connecté à la suite du deuxième ayant un rapport de division de 2 et délivrant le signal d'horloge $H_3$ et le quatrième 135 également connecté à la sortie du deuxième ayant un rapport de division de quinze et délivrant le signal d'horloge $H'_1$.

Le système de transmission qui vient d'être décrit se révèle particulièrement avantageux dans le cas d'une transmission de données à 16K bits/s qu'il permet d'effectuer dans un canal de 25 kHz avec un affaiblissement à l'extérieur du canal de l'ordre de 50 db. Son récepteur s'adapte à tout type de modulation par sauts de phase différentielle et n'est pas sensible aux formes des lois de phase. Il est particulièrement intéressant car il ne nécessite pas de séquence d'apprentissage pour la synchronisation de la porteuse locale et de l'horloge de réception de sorte qu'il peut être utilisé pour la réception d'une émission de courte durée de l'ordre d'une centaine de symboles.

## Revendications

1. Système de transmission synchrone de données à l'aide d'une porteuse modulée d'amplitude d'enveloppe constante, qui est muni d'un émetteur (10) transmettant les données en série, individuellement ou par groupes, au moyen de sauts de phase affectant une porteuse d'émission entre des instants caractéristiques séparés par des intervalles de temps constants égaux dits intervalles Baud et d'un récepteur (20) sensible aux sauts de phase de la porteuse d'émission entre lesdits instants caractéristiques, et dont l'émetteur (10) comporte un codeur (2) faisant correspondre aux données à émettre des valeurs discrètes de sauts de phase appliquées à la porteuse d'émission, un synthétiseur de symboles (3) élaborant sous le contrôle du codeur (2) la forme de la variation de phase à obtenir entre chaque instant caractéristique et un modulateur (5) opérant sous le contrôle du synthétiseur de symboles (3), caractérisé en ce que le synthétiseur de symboles (3) élabore, sous le contrôle du codeur (2), une loi de variation de phase continue avec une pente maximale au cours du symbole, qui est minimisée, s'exprimant en fonction du temps sous une forme polynomiale du troisième degré.

2. Système de transmission selon la revendication 1, caractérisé en ce que le synthétiseur de symboles (3) élabore sous le contrôle du codeur (2), entre chaque instant caractéristique une loi de variation de phase (T) s'exprimant en fonction du temps sous la forme :

$$\varphi(T) - \varphi(0) = T \left( a + bT \left( 1 - \frac{5T}{9\Delta} \right) \right) \quad \text{avec} \quad 0 \leqslant T \leqslant \Delta$$

dans laquelle $\Delta$ est un intervalle Baud c'est-à-dire la durée séparant deux instants caractéristiques consécutifs, a est un coefficient égal à la somme pondérée des dernier et avant-dernier sauts de phase effectués, la pondération étant respectivement de $3/4\Delta$ et $3/16\Delta$, et b est un coefficient égal au $9/4\Delta^2$ de la

différence entre le saut de phase à effectuer entre les instants caractéristiques considérés et le produit du coefficient a par l'intervalle Baud Δ.

3. Système de transmission selon la revendication 1 dans lequel le codeur (2) fait correspondre aux données à émettre un nombre limité de valeurs discrètes de saut de phase caractérisé en ce que le synthétiseur de symboles (3) est une mémoire morte dans laquelle sont stockées sous forme échantillonnée, les différentes formes possibles de la loi de variation de phase, la forme adaptée à la configuration en cours étant sélectionnée par le codeur à partir des valeurs du saut de phase à effectuer et des deux sauts de phase effectués précédemment.

4. Système de transmission selon la revendication 3, caractérisé en ce que l'échantillonnage des différentes formes possibles de la loi de variation de phase stockées dans la mémoire morte constituant le synthétiseur de symbole (3) est une approximation de chaque forme par échelons présents ou absents de même amplitude soit positive, soit négative.

5. Système de transmission selon la revendication 4, caractérisé en ce que la mémoire morte constituant le synthétiseur de symboles (3) est organisée en page contenant chacune l'échantillonnage d'une forme possible de la loi de variation de phase et adressée au niveau de l'ensemble des pages par le codeur (2) et au niveau de l'intérieur d'une page par un compteur (40) incrémenté par le signal de sortie du modulateur (5) et remis à zéro à chaque instant caractéristique, la porteuse d'émission modulée présentant entre chaque instant caractéristique un nombre de périodes fixe égal au nombre d'échantillons de chacune des formes possibles de la loi de variation de phase.

6. Système de transmission selon la revendication 1 dont le récepteur (20) comporte un démodulateur synchrone (12) piloté par une porteuse locale délivrant la loi de phase instantanée de la porteuse d'émission, un prédécodeur (14) délivrant la valeur instantanée du saut de phase effectué par la porteuse d'émission sur la durée d'un intervalle Baud, un récupérateur de cadence Baud et détecteur de dérive (15) et un décodeur (17) délivrant les données reçues à partir des signaux du prédécodeur (14) et du récupérateur de cadence Baud et détecteur de dérive (15), caractérisé en ce que le récupérateur de cadence Baud et détecteur de dérive (15) comporte :

— un corrélateur effectuant une double corrélation sur une durée de plusieurs intervalles Baud et parmi des échantillons du signal de sortie du précodeur (15) pris à une cadence égale à un multiple entier n de la cadence Baud, cette double corrélation s'effectuant d'une part en fonction du rang parmi n de chaque échantillon et d'autre part en fonction de l'écart dudit échantillon par rapport aux valeurs discrètes des sauts de phase d'émission

— et un détecteur de maximum déterminant la classe de corrélation la plus peuplée et délivrant le rang parmi n des échantillons de cette classe comme étant celui correspondant aux sauts de phase entre les instants caractéristiques d'émission et l'écart des échantillons de cette classe comme étant représentatif de la dérive entre les porteuses d'émission et de réception.

7. Système de transmission selon la revendication 6, caractérisé en ce que ledit récupérateur de cadence Baud et détecteur de dérive comporte un registre à décalage (150) mémorisant les échantillons du signal de sortie du précodeur sur la durée de la corrélation et les restituant ensuite au circuit décodeur.

8. Système de transmission selon la revendication 6, caractérisé en ce que le récepteur (20) comporte un oscillateur local (130) qui délivre une fréquence pilote ($\omega_1'$) à partir de laquelle est tirée la porteuse locale et qui est muni d'une boucle d'asservissement contrôlée par le signal de dérive fourni par le détecteur de maximum.

**Claims**

1. A system for synchronous data transmission by means of an amplitude modulated carrier having a constant envelope, the system being composed of a transmitter (10) transmitting the data in series, individually or in groups, by means of phase jumps applied to a transmission carrier between characteristic instants which are separated by equal and constant time intervals, called Baud intervals, and of a receiver (20) which is sensitive to the phase jumps of the transmission carrier between said characteristic instants, the transmitter (10) comprising a encoder (2) which correlates to the data to be transmitted discrete phase jump values applied to the transmission carrier, a symbol synthesizer (3) creating under the control of the encoder (2) the shape of the phase variation to be obtained between each characteristic instant and a modulator (5) operating under the control of the symbol synthesizer (3), characterized in that the symbol synthesizer (3) produces under the control of the encoder (2) a continuous phase variation law having a minimized maximum slope during the symbol, which is expressed in dependence of the time as a polynomial function of the third degree.

2. A transmission system according to claim 1, characterized in that the symbol synthesizer (3) produces under the control of the encoder (2), between each characteristic instant, a phase variation law (T) which can be expressed as a time function of the following form :

$$\varphi(T) - \varphi(0) = T\left(a + bT\left(1 - \frac{5T}{9\Delta}\right)\right) \quad \text{with} \quad 0 \leqslant T \leqslant \Delta$$

wherein $\Delta$ is a Baud interval, i.e. the duration between two successive characteristic instants, a is a coefficient equal to the weighted sum of the last and last but one performed phase jumps, the weighting being respectively $3/4\Delta$ and $3/16\Delta$, and b being a coefficient equal to $9/4\Delta^2$ of the difference between the phase jump to be performed between the considered characteristic instants and the product of the coefficient a with the Baud interval $\Delta$.

3. A transmission system according to claim 1, in which the encoder (2) correlates to the data to be transmitted a limited number of discrete phase jump values, characterized in that the symbol synthesizer (3) is a read-only memory, in which are stored in a sampled manner the different possible forms of the phase variation law, the form adapted to the actual configuration being selected by the encoder in accordance with the values of the phase jump to be performed and the two previously performed phase jumps.

4. A transmission system according to claim 3, characterized in that the sampling of the different possible forms of the phase variation law stored in the read-only memory constituting the symbol synthesizer (3) is an approximation of each form by present or absent steps of equal amplitude, either positive or negative.

5. A transmission system according to claim 4, characterized in that the read-only memory constituting the symbol synthesizer (3) is divided into pages, each containing the sampling of one possible form of the phase variation law, and is addressed at the page level by the encoder (2) and inside one page by a counter (40) which is incremented by the output signal of the modulator (5) and reset to zero at each characteristic instant, the modulated transmission carrier presenting between each characteristic instant a fixed number of periods equal to the number of samples of each one of the possible forms of the phase variation law.

6. A transmission system according to claim 1, in which the receiver (20) comprises a synchronous demodulator (12) controlled by a local carrier delivering the instantaneous phase law of the transmission carrier, a predecoder (14) supplying the instantaneous value of the phase jump performed by the transmission carrier over the duration of one Baud interval, a Baud frequency storing and drift detecting circuit (15) and a decoder (17) supplying the data received from the signals of the predecoder (14) and of the Baud frequency storing and drift detecting circuit, characterized in that the Baud frequency storing and drift detecting circuit (15) comprises :

— a correlator performing a double correlation over a duration of several Baud intervals and out of samples of the precoder output signal (15) taken at a frequency equal to an integer multiple n of the Baud frequency, this double correlation being performed, on the one hand, in accordance with the rank out of n of each sample, and on the other hand, in accordance with the distance of said sample with respect to the discrete transmission phase jump values,

— and a maximum value detector determining the correlation class of highest population and supplying the rank out of n of the samples of this class as that corresponding to the phase jumps between the characteristic transmission instant and the distance of the samples of this class as being representative of the drift between the transmission and reception carriers.

7. A transmission system according to claim 6, characterized in that said Baud frequency storing and drift detecting circuit comprises a shift register (150) storing the samples of the output signal of the precoder over the duration of the correlation, and restituting them afterwards to the decoder circuit.

8. A transmission system according to claim 6, characterized in that the receiver (20) comprises a local oscillator (130) which supplies a control frequency $(\omega_1')$ from which the local carrier is derived, and which is supplied with a control loop controlled by the drift signal supplied by the maximum value detector.

## Patentansprüche

1. Synchrones Datenübertragungssystem mithilfe eines Trägers, der mit einem Signal einer Amplitude mit konstanter Hüllkurve moduliert ist, mit einem Sender (10), der die Daten einzeln oder in Gruppen mithilfe von Phasensprüngen überträgt, die einen Sendeträger zwischen von konstanten gleichen Zeitintervallen, Baudintervalle genannt, getrennten charakteristischen Zeitpunkten beeinflussen, und mit einem Empfänger (20), der auf die Phasensprünge des Sendeträgers zwischen den charakteristischen Zeitpunkten anspricht, wobei der Sender (10) einen Kodierer (2), der den auszusendenden Daten diskrete Werte von Phasensprüngen zuordnet, denen der Sendeträger unterworfen wird, weiter einen Symbolsynthetisierer (3), der unter Steuerung durch den Kodierer (2) die Form der zwischen jedem charakteristischen Zeitpunkt zu erhaltenden Phasenveränderung erarbeitet, und einen Modulator (5) aufweist, der vom Symbolsynthetisierers (3) gesteuert wird, dadurch gekennzeichnet, daß der Symbolsynthetisierer (3) unter Steuerung durch den Kodierer (2) ein Gesetz kontinuierlicher Phasenverschiebung mit einer während des Symbols minimisierten maximalen Steigung erarbeitet, das als polynomiale Zeitfunktion dritten Grades ausgedrückt wird.

2. Übertragungssystem nach Anspruch 1, dadurch gekennzeichnet, daß der Symbolsynthetisierer (3) unter Steuerung durch den Kodierer (2) zwischen jedem charakteristischen Zeitpunkt ein Phasenvariationsgesetz (T) erarbeitet, das sich als zeitabhängige Funktion der folgenden Form darstellt :

$$\varphi(T) - \varphi(0) = T\left(a + bT\left(1 - \frac{5\,T}{9\,\Delta}\right)\right) \quad \text{mit} \quad 0 \leqslant T \leqslant \Delta$$

wobei Δ ein Baudintervall ist, d. h. die Dauer, die zwei aufeinanderfolgende charakteristische Zeitpunkte voneinander trennt, a ein Koeffizient gleich der gewichteten Summe des letzten und des vorletzten durchgeführten Phasensprungs ist und wobei die Gewichtung den Wert von 3/4Δ bzw. 3/16Δ besitzt und b ein Koeffizient gleich $9/4\Delta^2$ der Differenz zwischen dem zwischen den betrachteten charakteristischen Zeitpunkten durchzuführenden Phasensprung und dem Produkt des Koeffizienten a mit dem Baudintervall Δ ist.

3. Übertragungssystem nach Anspruch 1, in dem der Kodierer (2) den auszusendenden Daten eine beschränkte Anzahl von diskreten Phasensprungwerten zuordnet, dadurch gekennzeichnet, daß der Symbolsynthetisierer (3) ein Festwertspeicher ist, in dem in Probenform die verschiedenen möglichen Formen des Phasenvariationsgesetzes gespeichert sind, wobei die der jeweiligen Konfiguration angepaßte Form durch den Kodierer ausgehend von den Werten des durchzuführenden Phasensprungs und der beiden vorher durchgeführten Phasensprünge ausgewählt wird.

4. Übertragungssystem nach Anspruch 3, dadurch gekennzeichnet, daß die Probenbildung der verschiedenen möglichen Formen des Phasenvariationsgesetzes, die in dem den Symbolsynthetisierer (3) bildenden Festwertspeicher gespeichert sind, eine Annäherung jeder Form durch vorhandene oder nicht vorhandene positive oder negative Schritte gleicher Amplitude ist.

5. Übertragungssystem nach Anspruch 4, dadurch gekennzeichnet, daß der den Symbolsynthetisierer (3) bildende Festwertspeicher seitenweise organisiert ist und auf jeder Seite die Proben einer möglichen Form des Phasenvariationsgesetzes enthält, wobei dieser Speicher bezüglich der Gesamtheit der Seiten vom Kodierer (2) und bezüglich der Stelle innerhalb einer Seite von einem Zähler (40) adressiert wird, der vom Ausgangssignal des Modulators (5) weitergezählt wird und mit jedem charakteristischen Zeitpunkt auf Null gesetzt wird, wobei der modulierte Sendeträger zwischen jedem charakteristischen Zeitpunkt eine feste Zahl von Perioden gleich einer Anzahl von Proben jeder der möglichen Formen des Phasenvariationsgesetzes aufweist.

6. Übertragungssystem nach Anspruch 1, dessen Empfänger (20) einen Synchrondemodulator (12), der von einem das augenblickliche Phasengesetz des Sendeträgers liefernden lokalen Träger gesteuert wird, eine Vordekodierer (14), der den augenblicklichen von dem Sendeträger über die Dauer eines Baudintervals durchgeführten Phasensprungs liefert, einen Baud-Taktwiedergewinnungs- und Driftdetektorkreis (15) und einen Dekodierer (17) aufweist, der die empfangenen Daten ausgehend von den Signalen des Vordekodierers (14) und des Baud-Taktwiedergewinnungs- und Driftdetektorkreises (15) liefert, dadurch gekennzeichnet, daß der Baud-Taktwiedergewinnungs- und Driftdetektorkreis (15) aufweist:

— einen Korrelator, der eine doppelte Korrelation über eine Dauer von mehreren Baudintervallen und unter Proben des Ausgangssignals des Vorkodierers (15) mit einer Frequenz gleich einem ganzzahligen Vielfachen n der Baudfrequenz durchführt, wobei diese doppelte Korrelation einerseits abhängig vom Rang jeder Probe innerhalb n Proben und andererseits abhängig vom Abstand dieser Probe bezüglich diskreter Sendephasensprünge erfolgt,

— und einen Maximalwertdetektor, der die am häufigsten besetzten Korrelationsklasse bestimmt und den Rang der Proben dieser Klasse aus den n Rängen als den ausgibt, der den Phasensprüngen zwischen den charakteristischen Sendezeitpunkten entspricht, und den Abstand der Proben dieser Klasse angibt, der für die Abweichung zwischen dem Sendeträger und dem Empfangsträger repräsentativ ist.

7. Übertragungssystem nach Anspruch 6, dadurch gekennzeichnet, daß der Baud-Taktwiedergewinnungs- und Driftdetektorkreis ein Schieberegister (150) aufweist, das die Proben des Ausgangssignals des Vorkodierers über die Dauer der Korrelation speichert und sie dann an den Dekodierkreis abgibt.

8. Übertragungssystem nach Anspruch 6, dadurch gekenzeichnet, daß der Empfänger (20) einen örtlichen Oszillator (130) aufweist, der eine Pilotfrequenz ($\omega_1'$) liefert, aus der der örtliche Träger abgeleitet wird, wobei dieser Oszillator eine vom Driftsignal, das vom Höchstwertdetektor geliefert wird, gesteuerte Regelschleife besitzt.

FIG.1

# FIG.2

FIG.3